# EUROPÄISCHE PATENTSCHRIFT

(11) **EP 2 062 059 B1**
(45) Veröffentlichungstag und Bekanntmachung des Hinweises auf die Patenterteilung: **15.06.2011**
(21) Anmeldenummer: 07801308.3
(22) Anmeldetag: 01.09.2007
(51) Int. Cl.: G01P 3/481, G01B 7/14, F01D 17/06

(54) **MESSANORDNUNG ZUR ERFASSUNG EINES UMDREHUNGSIMPULSES EINES TRIEBWERKROTORS SOWIE VERFAHREN HIERZU**
MEASURING ARRANGEMENT FOR DETECTING A ROTARY MOMENTUM OF AN ENGINE ROTOR, AND ASSOCIATED METHOD
DISPOSITIF DE MESURE D'IMPULSION DE ROTATION D'UN ROTOR DE PROPULSEUR ET PROCÉDÉ CORRESPONDANT

(30) Priorität: 14.09.2006 DE 102006043283
(43) Veröffentlichungstag der Anmeldung: 27.05.2009
(73) Patentinhaber: MTU Aero Engines GmbH, 80995 München (DE)
(72) Erfinder: EBERL, Johann, 80804 München (DE); ZIELINSKI, Michael, 85716 Unterschleissheim (DE); ZILLER, Gerhard, 85221 Dachau (DE)
(86) Internationale Anmeldenummer: PCT/DE2007/001571
(87) Internationale Veröffentlichungsnummer: WO 2008/031394

(56) Entgegenhaltungen:
- EP-A- 0 246 576
- DE-A1- 1 423 599
- DE-A1- 4 328 686
- GB-A- 2 416 848
- JP-A- 57 200 832
- US-A- 3 628 136

## Beschreibung

Die vorliegende Erfindung betrifft eine Messanordnung zur Erfassung einer Drehbewegung eines Rotors, insbesondere eines Rotors, welcher drehbar in einem Verdichtergehäuse eines Strahltriebwerks aufgenommen ist, wobei der Rotor Schaufelelemente aufweist, welche äquidistant auf dem Umfang des Rotors angeordnet sind, und wobei ferner ein Sensor vorgesehen ist, welcher Messsignale zur elektronischen Weiterverarbeitung ausgibt, und wenigstens eine Maßverkörperung am Rotor ausgebildet ist, die mittels des Sensors durch die Drehbewegung periodisch erfassbar ist.

Beim Test von Komponenten von Strahltriebwerken, wie dem Verdichter oder der Turbine in einem Rig-Aufbau ist die Antriebswelle meist problemlos zugänglich. In diesen Fällen kann der 1/Umdrehungsimpuls einfach durch einen optischen Reflexionssensor, der auf eine Farbmarkierung auf der Antriebswelle reagiert, oder durch einen Abstandssensor, der lokale Vertiefungen oder Erhöhungen der Welle erkennt, erzeugt werden.

Hingegen entsteht bei Messungen an Volltriebwerken das Problem, dass die Welle wesentlich schwieriger zugänglich ist, und Sensoren nur sehr aufwendig an der Welle angebracht werden können. Insbesondere entsteht bei Hochdruckverdichtern das Problem, dass ein erheblicher konstruktiver Aufwand erforderlich ist, um Halterungen für die Sensoren einzubringen und die Kabel zur Übertragung der Messsignale nach außen zu führen. Sofern ein Drehzahlgeber vorhanden ist, kann ein Zahn einer Zahnscheibe, die auf der Rotorwelle angeordnet ist, gekürzt werden, woraus ein 1/Umdrehungsimpuls abgeleitet werden kann. Dies ist aber meist gar nicht oder zumindest nicht mit vertretbarem Aufwand kurzfristig durchführbar, und erfordert außerdem den Eingriff in ein fertiges und funktionierendes Bauteil des Strahltriebwerks.

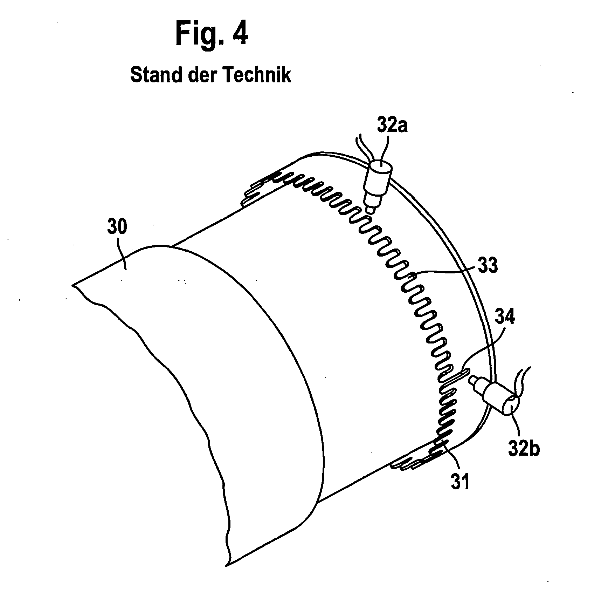

In Fig.4 ist ein Messaufbau gemäß dem Stand der Technik wiedergegeben, welcher geeignet ist, die Umdrehung eines Rotors eines Strahltriebwerks zu messen. Auf einer Rotorwelle 30 ist verdrehfest ein Zahnkranz 31 angeordnet, welcher eine Vielzahl von Zähnen mit kurzen Schlitzen 33 3 dazwischen aufweist. Dieser mit Zähnen versehene Zahnkranz 31 wird allgemein als Phonic Wheel bezeichnet. Beispielhaft sind zwei magnetische Sensoren 32 a und b dargestellt, welche sich nahe an den kurzen Schlitzen 33 bzw. an einem langen Schlitz 34 des Zahnkranzes 31 befinden. Läuft die Rotorwelle 30 mit einer Drehbewegung um die eigene Achse, so bewegen sich die Schlitze 33, 34 unter den Sensoren 32 a und b hinweg. Sind diese beispielsweise als magnetische Sensoren ausgebildet, so gibt der Sensor 32 a bei den Schlitzen 33 und 34 ein periodisch wiederkehrendes gleichförmiges Messsignal aus. Bei dem langen Schlitz 34 gibt nur der Sensor 32 b ein Messsignal aus. Dieses Messsignal kann durch eine Messwerterfassung extrahiert werden, woraus ein 1/Umdrehungsimpuls abgeleitet werden kann.

Gemäß dieses Aufbaus des Standes der Technik ergibt sich das Problem, dass sich die Zugänglichkeit eines sich an der Rotorwelle 30 befindenden Zahnkranzes 31 und der nahe am Zahnkranz 31 angeordneten Sensoren 32 a, b sehr schwer gestaltet. Allgemein sind Strahltriebwerke hinsichtlich ihrer angeordneten Komponenten sehr dicht gepackt, so dass die Rotorwelle selbst in einem zusammengebauten Zustand des Strahltriebwerks von außen gar nicht oder nur sehr schwer zugänglich ist. Auch Halterungen zur Anbringung der Sensoren sind schwierig ausführbar, da insbesondere ein räumliches. Problem gegeben ist.

Das Dokument DE 14 23 599 A1 betrifft eine Vorrichtung zur Messung der relativen Axialverschiebung eines Rotors gegenüber dem Stator z.B. einer Gasturbine. Dabei sind eine z- förmige Elektrode am Stator und eine stiftartige Elektrode am Rotor, insbesondere an einer Laufschaufelspitze, angeordnet. Beim gegenseitigen Passieren der Elektroden, werden Messsignale erzeugt, aus deren Relativlage auf die Größe der Axialverschiebung des Rotors geschlossen werden kann. Eine solche Vorrichtung könnte auch zur Erfassung der Drehbewegung, d.h. der Drehzahl, des Rotors verwendet werden. Der vorstehende Stift führt zu einer relativ großen Spaltbreite zwischen Stator und somit zu entsprechenden Spaltverlusten.

Das Dokument US-A -3628 136 betrifft ein kapazitives Spaltmesssystem zur Erfassung von spalten in Gasturbinen, insbesondere von Laufspalten zwischen Laufschaufelspitzen und Stator.

Es ist daher die Aufgabe der vorliegenden Erfindung, eine Messanordnung zur Erfassung eines 1/Umdrehungsimpulses eines Triebwerksrotors zu schaffen, welche es gestattet, die Spaltbreite zwischen Stator und Rotor zu verringern.

Diese Aufgabe wird durch eine Messanordnung mit den Merkmalen des Anspruchs 1 sowie durch ein Verfahren mit den Merkmalen des Anspruchs 8 gelöst. Vorteilhafte Ausführungsformen und Weiterbildungen der Erfindung sind in den abhängigen Ansprüchen angegeben.

Gemäß der vorliegenden Erfindung ist vorgesehen, dass die Maßverkörperung durch wenigstens ein modifiziertes Schaufelelement gebildet ist, welches einen endseitig gekürzten Bereich aufweist, und wobei der Sensor beim Vorbeilauf der Schaufelelemente ein jeweils etwa gleiches Messsignal ausgibt und beim Vorbeilauf des modifizierten Schaufelelementes ein modifiziertes Messsignal ausgibt.

Damit ergibt sich der erfindungswesentliche Vorteil, dass der Sensor zur Erfassung der Messsignale nicht mehr auf der Rotorwelle des Strahltriebwerks angeordnet werden muss. Es wird vielmehr die Möglichkeit geschaffen, den Sensor zur Erfassung der Messsignale im äußeren Bereich des Strahltriebwerks anzuordnen, welcher sich zumindest außerhalb der Umlaufbahn der Schaufelelemente befindet. Besonders vorteilhaft ist eine Anordnung des Sensors im Verdichtergehäuse des Strahltriebwerks, so dass dieser nahe an die äußere Umlaufbahn der Schaufelelemente gebracht ist, und die Schaufelelemente mit den endseitigen Bereichen am Sensor vorbeilaufen. Laufen die nicht modifizierten Schaufelelemente am Sensor vorbei, so werden Messsignale ausgegeben, welche sich einander gleichen. Läuft jedoch das modifizierte Schaufelelement am Sensor vorbei, so gibt dieser ein modifiziertes Messsignal aus, welches sich von den übrigen Messsignalen unterscheidet. Die Modifizierung des Schaufelelements wird durch einen gekürzten Bereich gebildet, welcher sich im Endbereich des Schaufelelements, d.h. in dem Bereich des größten Umlaufradius des Schaufelelements befindet. Die Kürzung des Schaufelelements wird auf eine Weise vorgenommen, so dass sich dieses deutlich aus der Längenstreuung der übrigen Schaufelelemente hervorhebt. Die Größe der Kürzung des Schaufelelements hängt von der Schwankungsbreite der einzelnen Schaufellängen ab, da sie diese deutlich überschreiten muss. Ein typischer Wert für die Kürzung kann in einem Bereich von 0,1 - 2 mm, vorzugsweise von 0,25 -1 mm und besonders bevorzugt 0,5 mm gesehen werden.

Gemäß einer vorteilhaften Weiterbildung der vorliegenden Erfindung ist vorgesehen, dass der Sensor als ein abstandsempfindlieher Sensor ausgebildet ist. Dieser kann nach einem kapazitiven, nach einem magnetischen und /oder nach einem optischen Prinzip der Messsignalerfassung funktionieren. Kapazitive Sensoren kommen beispielsweise auch für Messungen des Radialspiels zwischen dem Rotor und dem Gehäuse zum Einsatz, wobei generell alle Abstandssensoren Anwendung finden können, die mit anderen physikalischen Prinzipien arbeiten und die entsprechende geometrische Änderung des Schaufelelements detektieren können. Beispielsweise ist auch denkbar, ein optisches und insbesondere ein laserbasiertes System anzuwenden, welches ebenfalls berührungslos die geometrische Änderung des modifizierten Schaufelelements detektieren kann.

Gemäß eines weiteren Ausführungsbeispiels der vorliegenden Erfindung ist vorgesehen, dass sich der gekürzte Bereich des modifizierten Schaufelelements über die gesamte Sehnenlänge des Schaufelelements erstreckt oder nur in einem Teilbereich der Sehnenlänge ausgebildet ist. Die Sehnenlänge beschreibt dabei die Länge des Schaufelprofils gemessen von der Profilvorderkante zur Profilhinterkante. Um aufgrund des Masseverlustes durch den gekürzten Bereich des modifizierten Schaufelelements die entstehende Unwucht zu minimieren, kann daher vorgesehen sein, das modifizierte Schaufelelement nicht über der gesamten Profillänge, d.h. über der gesamten Sehnenlänge zu kürzen, sondern nur in einem Teilbereich eine geometrische Veränderung vorzunehmen. Hier ist beispielsweise eine Kürzung der Schaufelspitze im Bereich der Profilhinterkante möglich. Über diesem Teilbereich ist der Sensor angeordnet, wobei ein kleiner gekürzter Bereich des modifizierten Schaufelelements ausreicht, um eine hinreichende Unterscheidbarkeit des modifizierten Messsignals vom nicht modifizierten Messsignal zu schaffen.

Im Fall der Ausbildung des gekürzten Bereichs in einem Teilbereich der Sehnenlänge des modifizierten Schaufelelements ist vorgesehen, dass der Übergang des gekürzten Bereichs zum nicht gekürzten Bereich der Schaufelendseite Ausrundungsradien aufweist. Damit wird ein gleichmäßiger Übergang vom ungekürzten zum gekürzten Bereich geschaffen.

Vorteilhafterweise weist das modifizierte Messsignal eine niedrigere Amplitude auf, als das nicht modifizierte Messsignal. Bei Anwendung eines kapazitiven Sensors wird ein Messsignal ausgegeben, welches mit größerer Annäherung des Sensors an das metallische Bauteil, verkörpert durch das Schaufelelement, ein Messsignal mit höherer Amplitude ausgibt. Die Höhe der Amplitude äußert sich dabei in der Höhe der ausgegebenen Messspannung. Läuft ein nicht modifiziertes Schaufelelement am Sensor vorbei, so bewegt sich dieses durch die nicht vorhandene Kürzung näher am Sensor, wohingegen ein modifiziertes Schaufelelement mit einem gekürzten Bereich einen größeren Abstand zum messenden Sensor aufweist. Dadurch fällt die Spannung des Messsignals niedriger aus als beim Vorbeilaufen eines nicht modifizierten Schaufelelements mit einem nicht gekürzten Bereich. Durch eine Weiterverarbeitung des Messsignals kann nachfolgend das kleinere Messsignal aus den einander gleichen größeren Messsignalen herausgefiltert werden, um daraus einen 1/Umdrehungsimpuls zu generieren.

Ferner ist ein Verfahren zur Weiterverarbeitung von Messsignalen vorgesehen, wobei die Messsignale mittels der Messanordnung ausgegeben werden und wobei die Messsignale Scheitelwerte aufweisen, welche mit Abtast- oder Haltegliedes bis zum Scheitelwert des nachfolgenden Messsignals gehalten werden, um einen Scheitelwertverlauf zu bilden. Wird nun ein normales Messsignal erfasst, so bildet der Scheitelwert das Maximum der Messspannung. Dieses Maximum wird in einem Speicher gehalten und so lange unverändert gespeichert, bis der nächste Scheitelwert des folgenden Messsignals erfasst wird und sich dieser Scheitelwert vom vorangegangenen Scheitelwert unterscheidet. Durch dieses auch als 'Sample and Hold' bezeichnete Prinzip ist es möglich, einen Scheitelwertverlauf zu bilden, der lediglich die Änderung der jeweiligen Scheitelwerte ausgibt.

Vorteilhafterweise wird dabei die Differenz aus dem Scheitelwert, welcher das Signalmaximum des Messsignals bildet und dem Signalminimum, welcher vom Sensor zwischen den Schaufelelementen gemessen wird, erfasst, so dass die Messanordnung gegen niederfrequente Signalstörungen unempfindlich ist. Dieser Vorteil kann geltend gemacht werden, wenn keine absoluten Werte gemessen werden, sondern nur eine Differenz zwischen Maximum und Minimum, so dass bei niederfrequenten Signalstörungen zwar das gesamte Spannungsniveau des Messsignals veränderbar ist, jedoch die Differenz zwischen dem Maximum und dem Minimum des Signals nicht verändert wird, so dass sich der ausgegebene Scheitelwertverlauf durch niederfrequente Signalstörungen nicht ändert.

Gemäß eines weiteren vorteilhaften Ausführungsbeispiels der vorliegenden Erfindung ist vorgesehen, dass eine Hochpassfilterung der Messsignale vorgenommen wird, um eine Offset-Unterdrückung zu schaffen und den Signalverlauf zu bilden. Ferner ist vorgesehen, dass eine Tiefpassfilterung der Messsignale vorgenommen wird, um eine Glättung der Signale zu schaffen und hieraus ebenfalls den Signalverlauf zu bilden.

Um nun einen 1/Umdrehungsimpuls aus dem Signalverlauf zu isolieren, ist erfindungsgemäß vorgesehen, dass eine Flankentriggerung des Signalverlaufes gegen eine Triggerschwelle gebildet wird. Nach der Flankentriggerung erfolgt noch eine anschließende Impulsformung, so dass ein 1/Umdrehungsimpuls isoliert dargestellt werden kann. Fällt der Signalverlauf unter die Triggerschwelle, so gibt die Impulsformung den Beginn des 1/Umdrehungsimpulses aus, wobei es zur weiteren Signalverarbeitung unerheblich ist, welche Impulsbreite der 1/Umdrehungsimpuls aufweist. Alternativ kann vorgesehen werden, das Überschreiten der Triggerschwelle zu detektieren und daraufhin die Impulsformung vorzunehmen, da sowohl das Unterschreiten als auch das Überschreiten der Triggerschwelle pro Umdrehung des Rotors jeweils nur einmal auftritt.

Weitere, die Erfindung verbessernde Maßnahmen sind in den abhängigen Ansprüchen angegeben oder werden nachfolgend gemeinsam mit der Beschreibung eines bevorzugten Ausfübrungsbeispiels der Erfindung anhand der Figuren näher dargestellt. Es zeigt:
- Fig.1: eine schematische Darstellung der Anordnung eines Sensors sowie eines modifizierten Schaufelelements in einer Seitenansicht gemäß der vorliegenden Erfindung;
- Fig.2: eine Draufsicht eines Rotors mit mehreren Schaufelelementen, wobei ein Schaufelelement als modifiziertes Schaufelelement dargestellt ist;
- Fig.3a: den Verlauf von Messsignalen, welche von der Messanordnung ausgegeben werden, wobei ein Messsignal als modifiziertes Messsignal dargestellt ist;
- Fig.3b: den Verlauf der Messsignale gemäß Fig.3a, wobei ferner ein Scheitelwertverlauf dargestellt ist;
- Fig.3c: einen Scheitelwertverlauf gemäß Fig.3b, wobei ferner ein Signalverlauf dargestellt ist, welcher sich durch Hochpassfilterung und leichte Tiefpassfilterung ergibt und welcher gegen eine Triggerschwelle getriggert ist;
- Fig.3d: einen 1/Umdrehungsimpuls zur Darstellung einer Umdrehung des Rotors des Strahltriebwerks; und
- Fig.4: eine Messanordnung zur Erzeugung eines 1/Umdrehungsimpulses direkt an der Rotorwelle gemäß des Standes der Technik.

Bei den Figuren handelt es sich lediglich um beispielhafte schematische Darstellungen der vorliegenden Erfindung.

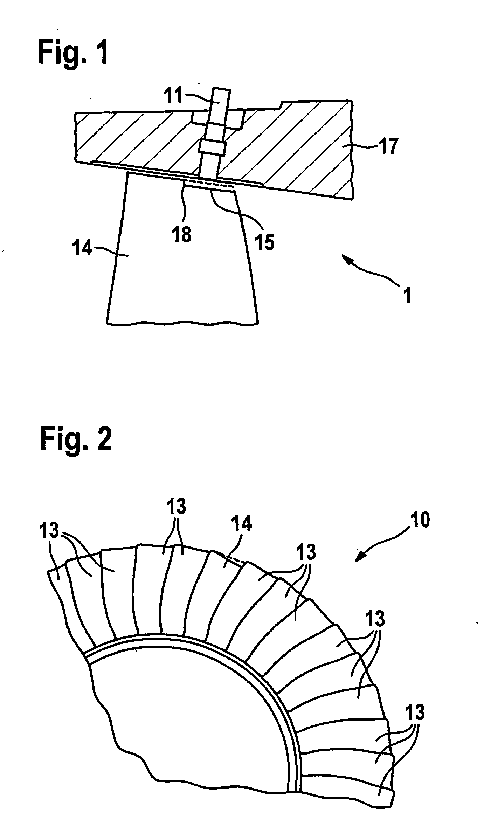

Figur 1 zeigt eine Messanordnung 1 zur Generierung eines 1/Umdrehungsimpulses, wobei ein Sensor 11 gemäß der vorliegenden Erfindung im Außenbereich des Strahltriebwerks angeordnet ist. Insbesondere ist der Sensor 11 im Verdichtergehäuse 17 angeordnet, und ist somit von der Außenseite des Strahltriebwerks leicht zugänglich. Der Sensor 11 ist als kapazitiver Abstandssensor ausgebildet, wobei unterhalb des Sensors 11 ein modifiziertes Schaufelelement 14 dargestellt ist, welches im radial außenseitigen Endbereich einen gekürzten Bereich 15 aufweist. Dieser gekürzte Bereich 15 erstreckt sich über einen Teilbereich der Sehnenlänge des modifizierten Schaufelelements 14, wobei die ursprüngliche Kontur des Schaufelelements 14 mittels einer gestrichelten Linie angedeutet ist. Beim Vorbeilauf des modifizierten Schaufelelements 14 detektiert der Sensor 11 einen größeren Abstand der Körperkante des modifizierten Schaufelelements 14, wobei der größere Abstand durch den gekürzten Bereich 15 gebildet wird. Der Sensor 11 kann dabei in das Verdichtergehäuse 17 eingeschraubt, geklemmt, geklebt oder auf sonstige Weise verbunden werden. Der sensierende Bereich des Sensors 11 ist in Richtung des Schaufelelements 14 ausgerichtet, wobei der Spalt zwischen dem Sensor 11 und dem Schaufelelement wenige Millimeter oder sogar Submillimeter betragen kann.

Figur 2 zeigt eine Draufsicht eines Rotors 10, welches eine Vielzahl von Schaufelelementen 13 aufweist, wobei ein Schaufelelement als modifiziertes Schaufelelement 14 ausgebildet ist. Wie in der Figur dargestellt, ist das modifizierte Schaufelelement 14 kürzer als die übrigen Schaufelelemente 13, wobei die Kürzung des Schaufelelements 14 nur geringfügige Werte aufweist.

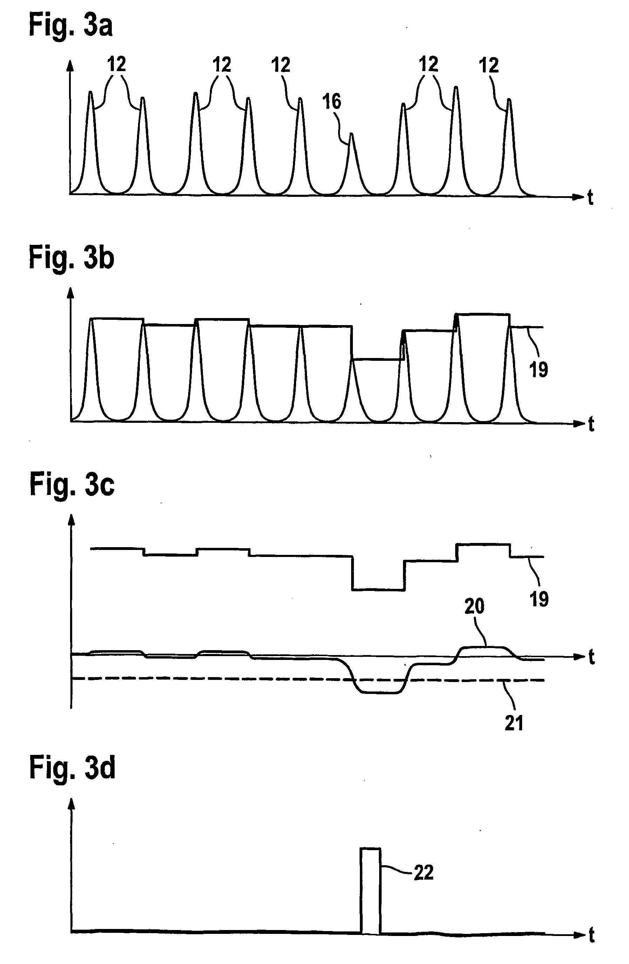

Figur 3a zeigt ein Diagramm, wobei auf der Ordinate das Messsignal als Wert dargestellt ist, ohne dass diesem eine physikalische Größe zugeordnet ist. Im Folgenden kann angenommen werden, dass es sich bei dem Messsignal um eine Spannung U handelt. Auf der Abszisse ist die Zeit aufgetragen, über der die Messsignale aufgenommen werden. Zunächst folgen fünf normale Messsignale 12, welche einen im Wesentlichen gleichen Scheitelwert aufweisen. Das sechste Messsignal ist ein modifiziertes Messsignal 16, welches einen deutlich niedrigeren Scheitelwert aufweist. Nachfolgend sind beispielhaft drei weitere normale Messsignale 12 aufgetragen. Der niedrigere Scheitelwert des modifizierten Messsignals 16 resultiert aus dem größeren geometrischen Abstand des Sensors zum modifizierten Schaufelelement, und unterscheidet sich wesentlich von den übrigen Messsignalen 12. Die übrigen Messsignale 12 sind zueinander nicht vollständig gleich, sondern unterliegen auch einer gewissen Schwankung, wobei sich die Schwankungsbreite aus den verschiedenen Schaufellängen und Schaufeldicken (Fertigungstoleranz) ergibt. Jedoch ist der Unterschied des Scheitelwertes des modifizierten Messsignals 16 wesentlich größer als die Schwankungsbreite der übrigen Messsignale 12.

Figur 3b zeigt die Messsignale 12 bzw. 16 aus Figur 3a, wobei ferner ein Scheitelwertverlauf 19 eingezeichnet ist. Dieser wird mittels Abtast- und/ oder Haltegliedern gebildet, indem zunächst ein erster Scheitelwert eines Messsignals detektiert wird, und bis zur Detektion eines weiteren Messsignals gehalten wird. Somit entsteht ein durchgehendes Signal in Form eines Scheitelwertverlaufs 19, wobei die Höhe des Signals 19 immer nur dann eine Änderung erfährt, wenn sich ein Scheitelwert eines Messsignals 12 ändert.

Eine wesentliche Änderung erfährt der Scheitelwertverlauf 19 dann, wenn auf ein Messsignal 12 ein modifiziertes Messsignal 16 folgt. Die Änderung wird erst zurückgesetzt, wenn nach dem modifizierten Messsignal 16 wieder ein normales Messsignal 12 folgt.

Figur 3c zeigt neben dem Scheitelwertverlauf 19 einen Signalverlauf 20. Ferner ist eine Triggerschwelle 21 eingezeichnet. Der Signalverlauf 20 wird durch eine Hochpassfilterung des Signalverlaufs 19 vorgenommen, um eine Offset-Unterdrückung zu schaffen. Ferner erfolgt eine Tiefpassfilterung des Signals, um eine Glättung des Signalverlaufs zu schaffen. Entspricht der Signalverlauf 20 den Messsignalen 12, so wird die Triggerschwelle 21 nicht unterschritten. Folgt jedoch ein modifiziertes Messsignal 16, so wird die Triggerschwelle 21 unterschritten, wobei zunächst eine Flankentriggerung des Signalverlaufs 20 gegen die Triggerschwelle 21 gebildet wird.

Figur 3d zeigt einen 1/Umdrehungsimpuls, welcher durch die Flankentriggerung des Signalverlaufs 20 aus Figur 3c isoliert werden kann, um eine Umdrehung des Rotors durch den 1/Umdrehungsimpuls 22 darzustellen. Dabei wird der 1/Umdrehungsimpuls 22 genau dann gebildet, wenn der Signalverlauf 20 die Triggerschwelle 21 unterschreitet. Die Breite, d.h. die Dauer des 1/Umdrehungsimpulses 22 spielt für die Darstellung des Messwertes keine wesentliche Rolle, wobei ferner auch eine Triggerung des Messsignals erfolgen kann, wenn der Signalverlauf 20 die Triggerschwelle wieder überschreitet.

Die vorliegende Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Messanordnung (1) zur Erfassung einer Drehbewegung eines Rotors (10), welcher insbesondere drehbar in einem Verdichtergehäuse (17) eines Strahltriebwerkes angeordnet ist, wobei der Rotor (1 0)vorzugsweise äquidistant auf dem Umfang angeordnete Schaufelelemente (13) aufweist, und wobei ferner wenigstens ein Sensor (11) vorgesehen ist und wenigstens eine Maßverkörperung am Rotor (10) ausgebildet ist, die mittels des Sensors (11) durch die Drehbewegung periodisch erfassbar ist,
**dadurch gekennzeichnet, dass** die Maßverkörperung durch wenigstens ein modifiziertes Schaufelelement (14) gebildet ist, welches im Bereich (15) der Schaufelspitze gekürzt ist, und wobei der Sensor (11) beim Vorbeilauf der Schaufelelemente (13) ein jeweils gleiches Messsignal ausgibt und beim Vorbeilauf des modifizierten Schaufelelementes (14) ein modifiziertes Messsignal (16) ausgibt.

2. Messanordnung (1) nach Anspruch 1,
**dadurch gekennzeichnet, dass** der Sensor (11) als abstandsempfindlicher Sensor (11) ausgebildet ist.

3. Messanordnung (1) nach Anspruch 1 oder 2,
**dadurch gekennzeichnet, dass** der Sensor (11) als kapazitiver, magnetischer und /oder optischer Sensor ausgebildet ist.

4. Messanordnung (1) nach einem der vorgenannten Ansprüche,
**dadurch gekennzeichnet, dass** der Sensor (11) im Verdichtergehäuse (17) des Strahltriebwerkes angeordnet ist, um nahe an der äußeren Umlaufbahn der Schaufelelemente (13, 14) zu sein.

5. Messanordnung (1) nach einem der vorgenannten Ansprüche,
**dadurch gekennzeichnet, dass** sich der gekürzte Bereich (15) des modifizierten Schaufelelementes (14) über der gesamten Sehnenlänge des modifizierten Schaufelelementes (14) erstreckt oder nur in einem Teilbereich der Sehnenlänge ausgebildet ist.

6. Messanordnung (1) nach Anspruch 5,
**dadurch gekennzeichnet, dass** der Übergang des gekürzten Bereiches (15) zum nicht gekürzten Bereich der Schaufelendseite Ausrundungsradien (18) aufweist.

7. Messanordnung (1) nach einem der vorgenannten Ansprüche,
**dadurch gekennzeichnet, dass** das modifizierte Messsignal (16) eine niedrigere Amplitude aufweist als die nicht modifizierten Messsignale (12).

8. Verfahren zur Weiterverarbeitung von Messsignalen (12, 16), welche mittels einer Messanordnung (1) gemäß einem der Ansprüche 1 bis 7 ausgegeben werden, wobei die Messsignale (12, 16) Scheitelwerte aufweisen, welche bis zum Scheitelwert des nachfolgenden Messsignals (12, 16) gehalten werden, um einen Scheitelwertverlauf (19) zu bilden, wobei aus dem Scheitelwertverlauf (19) ein Signalverlauf (20) gebildet wird, wobei eine Flankentriggerung des Signalverlaufes (20) gegen eine Triggerschwelle (21) gebildet wird und wobei eine anschließende lmpulsformung vorgenommen wird, um einen 1/ Umdrehungsimpuls (22) zu bilden.

9. Verfahren nach Anspruch 8,
**dadurch gekennzeichnet, dass** die Differenz aus dem Scheitelwert, welcher das Signalmaximum des Messsignals (12, 16) bildet, und dem Signalminimum, welches vom Sensor zwischen den Schaufelelementen (13, 14) gemessen wird, erfasst wird, sodass die Messanordnung gegen niederfrequente Signalstörungen unempfindlich ist.

10. Verfahren nach Anspruch 8 oder 9,
**dadurch gekennzeichnet, dass** eine Hochpassfilterung der Messsignale (12, 16) vorgenommen wird, um eine Offsetunterdrückung zu schaffen und den Signalverlauf (20) zu bilden.

11. Verfahren nach Anspruch 10,
**dadurch** gekennzeichet, dass eine Tiefpassfilterung der Messsignale (12, 16) vorgenommen wird, um eine Glättung des Signalverlaufs (20) zu schaffen.

## Claims

1. A measuring arrangement (1) for detecting a rotational movement of a rotor (10) which is arranged, in particular in a rotatable manner, in a compressor housing (17) of a jet engine, wherein the rotor (10) has blade elements (13) that are arranged preferably equidistantly on the circumference, and wherein, furthermore, there is provided at least one sensor (11) and there is formed on the rotor (10) at least one material measure which can be detected periodically by means of the sensor (11) as a result of the rotational movement,
**characterised in that** the material measure is formed by at least one modified blade element (14) which is shortened in the region (15) of the blade tip, and wherein the sensor (11) emits a measuring signal which is the same in each case when the blade elements (13) run past and emits a measuring signal (16) which is modified when the modified blade element (14) runs past.

2. A measuring arrangement (1) according to claim 1,
**characterised in that** the sensor (11) is formed as a distance-sensitive sensor (11).

3. A measuring arrangement (1) according to claim 1 or 2,
**characterised in that** the sensor (11) is formed as a capacitive, magnetic and/or optical sensor.

4. A measuring arrangement (1) according to one of the afore-mentioned claims,
**characterised in that** the sensor (11) is arranged in the compressor housing (17) of the jet engine in order to be close to the outer circular path of the blade elements (13, 14).

5. A measuring arrangement (1) according to one of the afore-mentioned claims,
**characterised in that** the shortened region (15) of the modified blade element (14) extends over the whole chord length of the modified blade element (14) or is formed only in a partial region of the chord length.

6. A measuring arrangement (1) according to claim 5,
**characterised in that** the transition of the shortened region (15) to the non-shortened region of the blade end side has rounding radii (18).

7. A measuring arrangement (1) according to one of the afore-mentioned claims,
**characterised in that** the modified measuring signal (16) has a lower amplitude than the non-modified measuring signals (12).

8. Method for further processing measuring signals (12, 16) which are emitted by means of a measuring arrangement (1) according to one of claims 1 to 7, wherein the measuring signals (12, 16) have peak values which are held until the peak value of the following measuring signal (12, 16) in order to form a peak-value characteristic (19), wherein a signal characteristic (20) is formed from the peak-value characteristic (19), wherein an edge triggering of the signal characteristic (20) with respect to a trigger threshold (21) is formed, and wherein subsequent pulse shaping is effected in order to form a 1/revolution pulse (22).

9. Method according to claim 8,
**characterised in that** the difference between the peak value, which forms the signal maximum of the measuring signal (12, 16), and the signal minimum, which is measured by the sensor between the blade elements (13, 14), is detected so that the measuring arrangement is insensitive to low-frequency signal interference.

10. Method according to claim 8 or 9,
**characterised in that** high-pass filtering of the measuring signals (12, 16) is effected in order to provide an offset-suppression and to form the signal characteristic (20).

11. Method according to claim 10,
**characterised in that** low-pass filtering of the measuring signals (12, 16) is effected in order to provide a smoothing of the signal characteristic (20).

## Revendications

1. Système de mesure (1) destiné à détecter un mouvement de rotation d'un rotor (10), lequel est monté en particulier de manière rotative dans lequel un carter (17) d'un compresseur d'un réacteur, le rotor (10) comporte des pales (13) disposées, de préférence, à équidistance sur sa circonférence, dans lequel il est prévu au moins un capteur (11) et au moins un étalon est réalisé sur le rotor (10), lequel peut être détecté périodiquement au moyen du capteur (11) lors du mouvement de rotation,
**caractérisé en ce que** l'étalon est formé par au moins une pale modifiée (14), qui est raccourcie au niveau (15) de l'extrémité de la pale, et **en ce que** le capteur (11) délivre un signal de mesure identique lorsque chacune des pales (13) passe en.regard dudit capteur et un signal de mesure (16) modifié lorsque la pale modifiée (14) passe en regard dudit capteur.

2. Système de mesure (1) selon la revendication 1, **caractérisé en ce que** le capteur (11) est un capteur (11) de distance.

3. Système de mesure (1) selon la revendication 1 ou 2, **caractérisé en ce que** le capteur (11) est un capteur de type capacitif, magnétique et/ou optique.

4. Système de mesure (1) selon l'une quelconque des revendications précédentes, **caractérisé en ce que** le capteur (11) est disposé dans le carter (17) du compresseur du réacteur afin d'être à proximité de la trajectoire de rotation extérieure des pales (13, 14).

5. Système de mesure (1) selon l'une quelconque des revendications précédentes, **caractérisé en ce que** la zone raccourcie (15) de la pale modifiée (14) s'étend sur toute la longueur de corde de la pale modifiée (14) ou est réalisée seulement sur une portion de ladite longueur de corde.

6. Système de mesure (1) selon la revendication 5, **caractérisé en ce que** la transition de la zone raccourcie (15) vers la zone non raccourcie au niveau de l'extrémité d'une pale présente des rayons d'arrondissage (18).

7. Système de mesure (1) selon l'une quelconque des revendications précédentes, **caractérisé en ce que** le signal de mesure (16) modifié présente une amplitude plus faible que celle des signaux de mesure (12) non modifiés.

8. Procédé pour le traitement ultérieur des signaux de mesure (12, 16) qui sont délivrés au moyen d'un système de mesure (1) selon l'une des revendications 1 à 7, dans lequel :
les signaux de mesure (12, 16) comportent des valeurs maximales qui sont maintenues jusqu'à la valeur maximale du signal de mesure (12, 16) suivant afin de former une courbe de valeurs maximales (19),
une courbe de signaux (20) est formée à partir de la courbe de valeurs maximales (19), un déclenchement des flancs d'impulsion de la courbe des signaux (20) étant formé à l'encontre d'un seuil de déclenchement (21) et une formation d'impulsion adjacente étant effectuée pour former une 1/impulsion de rotation (22).

9. Procédé selon la revendication 8, **caractérisé en ce que** la différence formée entre la valeur maximale, qui forme le maximum du signal de mesure (12, 16), et le minimum du signal, qui est mesuré par le capteur entre les pales (13, 14), est enregistrée, de telle sorte que le système de mesure est insensible aux parasites à basse fréquence des signaux.

10. Procédé selon la revendication 8 ou 9, **caractérisé en ce qu'**il est effectué un filtrage passe-haut des signaux de mesure (12, 16) afin de créer une suppression du décalage de fréquence et former la courbe des signaux (20).

11. Procédé selon la revendication 10, **caractérisé en ce qu'**il est effectué un filtrage passe-haut des signaux de mesure (12, 16) afin de créer un lissage de la courbe des signaux (20).
